# EUROPEAN PATENT APPLICATION

(11) **EP 4 819 289 A1**
(43) Date of publication of application: **07.10.2026**
(21) Application number: 24916213.2
(22) Date of filing: 14.03.2024
(51) Int. Cl.: H01M 10/0587

(54) **BATTERY CELL, BATTERY, AND ELECTRIC DEVICE**

(30) Priority: 09.01.2024 CN 202420051141 U
(71) Applicant: Contemporary Amperex Technology Co., Limited, Ningde, Fujian 352100 (CN)
(72) Inventor: WU, Xiang, Ningde, Fujian 352100 (CN); ZHANG, Xiaowei, Ningde, Fujian 352100 (CN); WANG, Zejiang, Ningde, Fujian 352100 (CN); WEN, Yuqian, Ningde, Fujian 352100 (CN)
(74) Representative: Kraus & Lederer PartGmbB
(86) International application number: PCT/CN2024/081691
(87) International publication number: WO 2025/148153

(57) **Abstract**

The present application relates to the technical field of batteries, and provides a battery cell, a battery , and an electric device. The battery cell comprises an electrode assembly , and the electrode assembly comprises an electrode sheet and an adhesive tape . The electrode sheet is wound along a preset winding direction, and the electrode sheet comprises a first end close to a winding start point and a second end close to a winding end point. The adhesive tape is at least partially bonded to the surface of the first end and/or the second end of the electrode sheet, wherein the adhesive tape comprises through holes passing through the adhesive tape along the thickness direction. According to the battery cell provided by the embodiments of the present application, the adhesive tape is bonded to the surface of the first end of the electrode sheet close to the winding start point, so that the supporting effect of a central hole of the electrode assembly can be improved; the adhesive tape is bonded to the surface of the second end of the electrode sheet close to the winding end point, so that the termination and fixation effects of the electrode sheet can be achieved, thereby preventing the wound electrode assembly from loosening; and the adhesive tape comprises the through holes passing through the adhesive tape along the thickness direction, so that the infiltration effect of an electrolyte during injection into the battery cell can be improved, thereby improving the cycle performance of the battery cell.

## Description

### CROSS-REFERENCE TO RELATED APPLICATIONS

The present application refers to Chinese Patent Application No. 202420051141.5, filed on January 9, 2024 and entitled "BATTERY CELL, BATTERY, AND ELECTRIC DEVICE", which is incorporated herein by reference in its entirety.

### TECHNICAL FIELD

The present application relates to the technical field of batteries, and particularly to a battery cell, a battery, and an electric device.

### BACKGROUND

Energy conservation and emission reduction are the key to the sustainable development of the automobile industry. Electric vehicles have become an important component of the sustainable development of the automobile industry due to their advantages in energy conservation and environmental protection. For electric vehicles, battery technology is also an important factor concerning their development.

During the charging and discharging process of a battery, a battery cell may bulge, affecting the safety performance of the battery. Furthermore, with the charge and discharge cycling of the battery, an electrolyte is continuously consumed, affecting the life of the battery.

### SUMMARY

The present application aims to solve at least one of the technical problems existing in the background art. For this purpose, an object of the present application is to provide a battery cell, a battery, and an electric device, to improve the cycle performance of the battery cell.

In embodiments of a first aspect of the present application, provided is a battery cell. The battery cell includes an electrode assembly. The electrode assembly includes an electrode sheet and an adhesive tape. The electrode sheet is wound along a preset winding direction. The electrode sheet includes a first end close to a winding start point and a second end close to a winding end point, and the adhesive tape is at least partially bonded to a surface of the first end and/or the second end of the electrode sheet, where the adhesive tape includes through holes passing through the adhesive tape in a thickness direction.

In the technical solutions of the embodiments of the present application, by bonding the adhesive tape to the surface of the first end of the electrode sheet close to the winding start point, the supporting effect of a central hole of the electrode assembly can be improved; by bonding the adhesive tape to the surface of the second end of the electrode sheet close to the winding end point a termination and fixation effect of the electrode sheet can be achieved, preventing the wound electrode assembly from loosening; the adhesive tape includes the through holes passing through the adhesive tape in the thickness direction, so that the infiltration effect of an electrolyte during injection into the battery cell can be improved, thereby improving the cycle performance of the battery cell.

In some embodiments, along a length direction of the electrode sheet, the adhesive tape includes a first area connected to a second area. The first area is bonded to the surface of the electrode sheet. The second area is offset from the electrode sheet where the through holes are located in the second area. By arranging the through holes in the second area offset from the electrode sheet, the first area without the through hole has a larger adhesion area with the surface of the electrode sheet, which can make the adhesion between the adhesive tape and the electrode sheet more secure and reliable, while effectively reducing the blocking of ion diffusion channels by the adhesive tape, and can also improve the infiltration an electrolyte during injection into the battery cell.

In some embodiments, the adhesive tape includes a first adhesive layer and a second adhesive layer, a first area of the first adhesive layer and a first area of the second adhesive layer are respectively bonded to opposite surfaces of the electrode sheet, and a second area of the first adhesive layer and a second area of the second adhesive layer are bonded to each other. By providing the first adhesive layer and the second adhesive layer, it is convenient to adhere the adhesive tape to both side surfaces of one end of the electrode sheet. Moreover, the two adhesive layers being bonded to each other can prevent adhesive layer exposure and maintain the adhesion of the electrode sheet during rollers passing, which facilitates smooth winding of the electrode assembly.

In some embodiments, the adhesive tape includes a substrate layer and an adhesive layer sequentially arranged along the thickness direction. The substrate layer is provided with a plurality of first via holes. The adhesive layer is provided with a plurality of second via holes in one-to-one correspondence with the plurality of first via holes. The first via holes and the second via holes are in communication to form the through holes. A projection of a first via hole on a surface of the adhesive layer completely falls within a range of a corresponding second via hole. Providing the first via hole in the substrate layer on the surface to be smaller than the second via hole in the adhesive layer allows for misalignment between through holes during the opposite adhesion process of the adhesive tape, thereby simplifying the adhesion process of the adhesive tape.

In some embodiments, along a width direction of the electrode sheet, the electrode sheet includes a tab area and an electrode sheet body area and at least a portion of a surface of the electrode sheet body area is bonded to the adhesive tape. Along the width direction of the electrode sheet, the electrode sheet includes the tab area and the electrode sheet body area, and at least a portion of the surface of the electrode sheet body area is bonded to the adhesive tape. Adhering the adhesive tape to a portion of the surface of the electrode sheet can reduce the probability of adhesive tape misalignment, adhesive tape wrinkling, or bubbles, thereby simplifying the adhesion process of the adhesive tape.

In some embodiments, at least a portion of a surface of the tab area is bonded to the adhesive tape. By adhering the adhesive tape to at least a portion of the surface of the tab area, the probability of tab area folding can be reduced.

In some embodiments, the through holes have a shape including one or more of an ellipse, a circle, and a polygon. The shape of the through hole includes one or more of an ellipse, a circle, and a polygon. Thus, the through holes can be compatible with various shapes, making it suitable for various punching dies during the processing of the through holes, thereby reducing the production difficulty of the adhesive tape.

In some embodiments, a ratio S of a distance between centers of two adjacent through holes to a maximum distance from a center of a through hole to an edge of the through hole satisfies 2 < S ≤ 3. By making the ratio S of the distance between centers of two adjacent through holes to the maximum distance from the center of a through hole to the edge of the through hole satisfy 2 ≤ S ≤ 3, the infiltration effect of the electrolyte can also be enhanced, while improving the supporting effect on the electrode assembly.

In some embodiments, the through holes are circular holes. A diameter L1 of the through holes satisfies 0.1 mm ≤ L1 ≤ 10 mm. A distance L2 between centers of two adjacent through holes satisfies 0.2 mm ≤ L2 ≤ 30 mm. By making the diameter L1 of the through holes satisfy 0.1 mm ≤ L1 ≤ 10 mm, and the distance L2 between centers of two adjacent through holes satisfy 0.2 mm ≤ L2 ≤ 30 mm, the adhesion between the adhesive tape and the electrode sheet can be secure and reliable, while reducing the blocking of lithium-ion diffusion channels by the adhesive tape and reducing the impact of the adhesive tape on the electrolyte infiltration effect.

In some embodiments, the diameter L1 of the through holes satisfies 0.5 mm ≤ L1 ≤ 5 mm, and the distance L2 between centers of two adjacent through holes satisfies 1 mm ≤ L2 ≤ 15 mm. By making the diameter L1 of the through holes satisfy 0.5 mm ≤ L1 ≤ 5 mm, and the distance L2 between centers of two adjacent through holes satisfy 1 mm ≤ L2 ≤ 15 mm, the adhesion between the adhesive tape and the electrode sheet can be made more secure and reliable, while effectively reducing the blocking of lithium-ion diffusion channels by the adhesive tape and further reducing the impact of the adhesive tape on the electrolyte infiltration effect.

In embodiments of a second aspect of the present application, provided is a battery, including the battery cell according to the above embodiments.

In embodiments of a third aspect of the present application, provided is an electric device, including the battery according to the above embodiments, and the battery is used to provide electrical energy.

The above description is only an overview of the technical solution of the present application. To understand the technical means of the present application more clearly, same can be implemented according to the content of the specification. To make the above and other objectives, features, and advantages of the present application more obvious and understandable, specific embodiments of the present application are listed below.

### BRIEF DESCRIPTION OF THE DRAWINGS

In the drawings, unless otherwise specified, the same reference numerals throughout several drawings denote the same or similar components or elements. These drawings are not necessarily drawn to scale. It should be understood that these drawings only depict some embodiments disclosed according to the present application and should not be considered as limiting the scope of the present application. To describe the technical solutions of the embodiments of the present application more clearly, the drawings required in the embodiments of the present application will be described briefly below. Obviously, the drawings illustrated below merely show some embodiments of the present application, and for those of ordinary skill in the art, other drawings can be obtained on the basis of these drawings without any creative efforts.
FIG. 1 is a schematic structural diagram of a vehicle according to some embodiments of the present application;
FIG. 2 is an exploded schematic structural diagram of a battery according to some embodiments of the present application;
FIG. 3 is an exploded schematic structural diagram of a battery cell according to some embodiments of the present application;
FIG. 4 is a schematic structural diagram of an electrode assembly provided by some embodiments of the present application;
FIG. 5 is a schematic diagram of an unfolded electrode sheet provided by some embodiments of the present application;
FIG. 6 is a first schematic diagram of taping an electrode sheet provided by some embodiments of the present application;
FIG. 7 is a second schematic diagram of taping an electrode sheet provided by some embodiments of the present application;
FIG. 8 is a third schematic diagram of taping an electrode sheet provided by some embodiments of the present application;
FIG. 9 is a fourth schematic diagram of taping an electrode sheet provided by some embodiments of the present application;
FIG. 10 is a partial enlarged view of an adhesive tape provided by some embodiments of the present application;
FIG. 11 is a cross-sectional view of FIG. 10.

### Description of Reference Numerals:

1000. vehicle;
100. battery; 200. controller; 300. motor;
10. box; 11. first portion; 12. second portion;
20. battery cell; 21. end cover; 22. case; 23. electrode assembly;
201. electrode sheet; 210. positive electrode sheet; 211. first end of positive electrode sheet; 212. second end of positive electrode sheet; 220. negative electrode sheet; 221. first end of negative electrode sheet; 222. second end of negative electrode sheet; 230. tab area; 240. electrode sheet body area; 310. separator;
400. adhesive tape; 410. first area; 420. second area; 430. through hole; 401. first adhesive layer; 402. second adhesive layer; 440. first via hole; 450. second via hole; 403. substrate layer; 404. adhesive layer.

### DETAILED DESCRIPTION

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

All the technical and scientific terms used herein have the same meanings as those commonly understood by those skilled in the pertinent technical field of the present application, unless otherwise defined. The terms used herein are merely for the purpose of description of the particular embodiments, but are not intended to limit the present application. The terms "comprising", "having" and any variations thereof in the specification and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the phrase "and/or" is only an association relationship describing association objects and represents that there may be three relationships, for example, A and/or B may represent three situations: A exists alone, both A and B exist, and B exists alone. In addition, the character "/" herein generally indicates an "or" relationship between the associated objects.

In the description of the embodiments of the present application, the term "a plurality of" refers to two or more, and similarly, "a plurality of groups" refers to two or more groups and "a plurality of pieces" refers to two or more pieces.

In the description of the embodiments of the present application, the orientation or position relationship indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element referred to must have a specific orientation or be constructed and operated in a described orientation, and therefore cannot be construed as limiting the embodiments of the present application.

In the description of the embodiments of the present application, unless otherwise explicitly and specified and defined, the technical terms "mounting", "connecting", "connection", "fixing", etc. should be understood in a broad sense, for example, may be fixed connection, detachable connection or integration, or may be either mechanical connection or electrical connection, or may be either direct connection or indirect connection through an intermediate medium, or may be the relationship of the communication of interiors of two elements or the interaction of two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

The battery cell includes an electrode assembly and an electrolyte. The electrode assembly is composed of a positive electrode sheet, a negative electrode sheet and a separator. The battery cell operates mainly by relying on movements of metal ions between the positive electrode sheet and the negative electrode sheet.

For a wound electrode assembly, after the positive electrode sheet, separator, and negative electrode sheet are wounded, a central hole will be formed at the center position of the electrode assembly. During charging and discharging of the electrode assembly, as the electrode sheets expand and contract, the center position of the electrode assembly is prone to collapse. After the electrode sheet at this position collapses, it is prone to wrinkling, making the electrode sheet uneven, causing gully-shaped gaps between electrode sheets and hindering ion transmission.

In an embodiment, the electrode sheet can be reinforced by adhering an adhesive tape to the starting position of the electrode sheet, causing the electrode sheet at the central hole position to form a self-supporting structure, enhancing the anti-deformation ability of the electrode sheet, and reducing the risk of deformation and collapse at the center position of the electrode assembly. However, due to the adhesive tape bonded to the starting position of the electrode sheet, the infiltration time of the electrolyte during electrolyte injection is long, the fluidity of the electrolyte at the adhesive taped portion is poor, and the cycle performance of the battery cell is not good.

Based on the above considerations, to solve the problem of poor battery cycle performance, in the present application proposed is a battery cell. By bonding the adhesive tape to the surface of the first end of the electrode sheet close to the winding start point, the supporting effect of the central hole of the electrode assembly is improved; by bonding the adhesive tape to the surface of the second end of the electrode sheet close to the winding end point, the termination and fixation effect of the electrode sheet is achieved, ensuring that the wound electrode assembly does not loosen; the adhesive tape includes through holes passing through the adhesive tape in the thickness direction, improving the infiltration effect of an electrolyte during injection into the battery cell, thereby improving the cycle performance of the battery cell.

The battery cell disclosed in this example of the present application may be used in but is not limited to a power consuming apparatus such as a vehicle, a ship, or an aircraft. A power supply system of such an electric device can be formed using the battery cell, battery, etc., disclosed in the present application, so this is beneficial for improving the fluidity of the electrolyte in the battery cell and enhancing the cycle performance of the battery cell.

The embodiments of the present application provide an electric device using a battery as a power supply. The electric device may be, but is not limited to, a mobile phone, a tablet, a laptop, an electric toy, an electric tool, a battery cart, an electric vehicle, a ship, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

For ease of description of the following embodiments, an example in which a electric device according to an embodiment of the present application is a vehicle 1000 is taken for description.

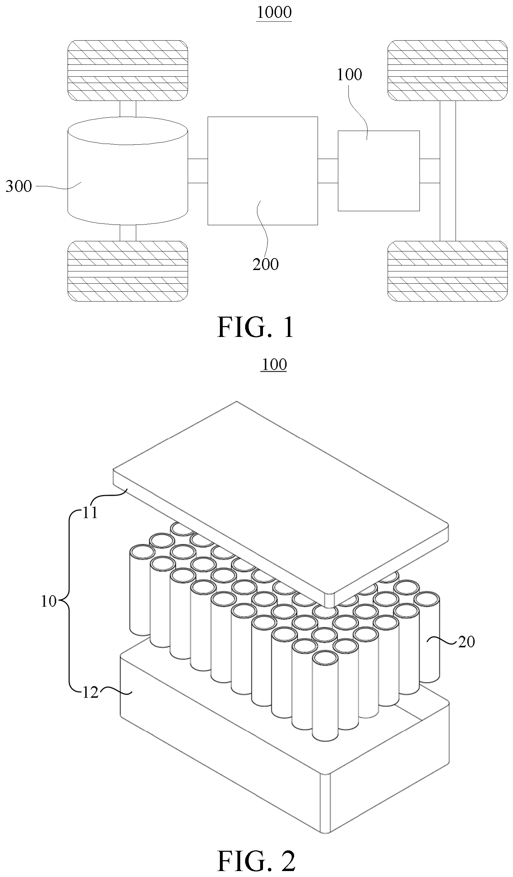

Referring to FIG. 1, FIG. 1 is a schematic diagram of a vehicle according to some embodiments of the present application. The vehicle 1000 may be a fuel vehicle, a gas vehicle or a new energy vehicle. The new energy vehicle may be a battery electric vehicle, a hybrid electric vehicle, an extended-range vehicle, etc. A battery 100 is provided inside the vehicle 1000, and the battery 100 may be arranged at a bottom, a head or a tail of the vehicle 1000. The battery 100 may be used for supplying power to the vehicle 1000. For example, the battery 100 may serve as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 may not only serve as a power supply for operating the vehicle 1000, but also serve as a power supply for driving the vehicle 1000, in place of or partially in place of fuel or natural gas, to supply driving power to the vehicle 1000.

Referring to FIG. 2, FIG. 2 is an exploded schematic structural diagram of a battery according to some embodiments of the present application. The battery 100 includes a box 10 and battery cells 20. The battery cells 20 are accommodated in the box 10. The box 10 is configured to provide an accommodating space for the battery cells 20, and the box 10 may be of various structures. In some embodiments, the box 10 may include a first portion 11 and a second portion 12, the first portion 11 and the second portion 12 being fitted to each other in a covering manner, and the first portion 11 and the second portion 12 jointly defining the accommodating space for receiving the battery cells 20. The second portion 12 may be of a hollow structure with one end open, the first portion 11 may be of a plate-like structure, and the first portion 11 covers an open side of the second portion 12 such that the first portion 11 and the second portion 12 jointly define the accommodating space; and the first portion 11 and the second portion 12 may also be of a hollow structure with one side open, and an open side of the first portion 11 covers the open side of the second portion 12. Of course, the box 10 formed by the first portion 11 and the second portion 12 may be in various shapes such as a cylinder and a cuboid.

In the battery 100, a plurality of battery cells 20 may be provided, and the plurality of battery cells 20 may be in series connection, in parallel connection or in series-parallel connection. The series-parallel connection means that some of the plurality of battery cells 20 are in series connection and some are in parallel connection. The plurality of battery cells 20 may be directly connected together in series, in parallel or in series-parallel, and then a unit consisting of the plurality of battery cells 20 is received in the box 10. Of course, the battery 100 may also be formed in such a way that a plurality of battery cells 20 are first connected in series, in parallel or in series-parallel to form a battery module, and then a plurality of battery modules are connected in series, in parallel or in series-parallel to form a unit and are received in the box 10. The battery 100 may further include other structures. For example, the battery 100 may further include a busbar component configured to achieve electrical connection between the plurality of battery cells 20.

The battery cell 20 may be a secondary battery or a primary battery, or may be a lithium-sulfur battery, a sodium-ion battery, or a magnesium-ion battery, but not limited to thereto. The battery cell 20 may be cylindrical, flat, rectangular, or in other shapes.

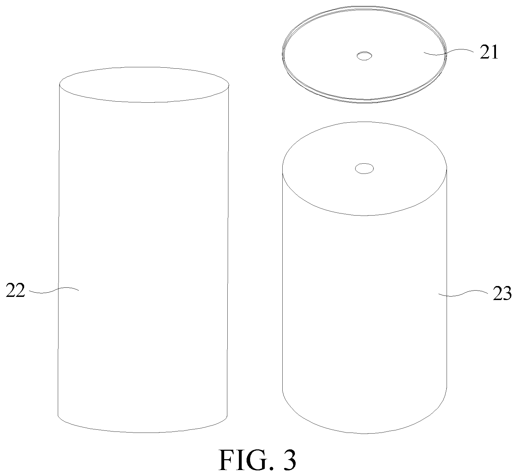

Referring to FIG. 3, FIG. 3 is an exploded schematic structural diagram of a battery cell according to some embodiments of the present application. A battery cell 20 is a smallest unit forming a battery. As shown in FIG. 3, the battery cell 20 includes an end cover 21, a case 22, an electrode assembly 23 and other functional components.

The end cover 21 refers to a component that covers an opening of the case 22 to isolate an internal environment of the battery cell 20 from an external environment. Without limitation, the end cover 21 may be shaped to adapt to the shape of the case 22 so as to fit with the case 22. In some embodiments, the end cover 21 may be made of a material (for example, an aluminum alloy) with a certain hardness and strength. In this way, the end cover 21 is less prone to deformation when subjected to compression and collision, so that the battery cell 20 may have a higher structural strength and the safety performance can also be improved. Functional components such as electrode terminals may be arranged on the end cover 21. The electrode terminals may be used for electrical connection to the electrode assembly 23 for outputting or inputting electric energy of the battery cell 20. In some embodiments, the end cover 21 may also be provided with a pressure relief mechanism configured to relieve internal pressure when the internal pressure or temperature in the battery cell 20 reaches a threshold. The material of the end cover 21 may also be various, such as copper, iron, aluminum, stainless steel, an aluminum alloy, a plastic, etc. In some embodiments, an insulator may also be arranged on an inner side of the end cover 21. The insulator can be configured to isolate electrical connection parts in the case 22 from the end cover 21, reducing a risk of short circuit. For example, the insulating member may be made of a plastic, a rubber, etc.

The case 22 is an assembly that is configured to fit with the end cover 21 so as to form the internal environment of the battery cell 20, where the formed internal environment may be used for accommodating the electrode assembly 23, an electrolyte and other components. The case 22 and the end cover 21 may be separate components, and the case 22 may be provided with an opening, at which the end cover 21 covers the opening to form the internal environment of the battery cell 20. Without limitation, the end cover 21 and the case 22 may also be integrated. Specifically, the end cover 21 and the case 22 may first form a common connecting surface before other components are placed into the case, and then the end cover 21 covers the case 22 when the interior of the case 22 needs to be packaged. The case 22 may be in various shapes and various sizes, for example, in the shape of a cuboid, a cylinder, a hexagonal prism, etc. Specifically, the shape of the case 22 may be determined according to the specific shape and size of the electrode assembly 23. The case 22 may be made of various materials, such as copper, iron, aluminum, stainless steel, aluminum alloy, and plastics.

The electrode assembly 23 is a component of the battery cell 20 where an electrochemical reaction occurs. The case 22 may include one or more electrode assemblies 23 therein. The electrode assembly 23 is mainly formed by winding or stacking a positive electrode sheet and a negative electrode sheet, and a separator is commonly provided between the positive electrode sheet and the negative electrode sheet. The portions of the positive electrode sheet and the negative electrode sheet that have the active material constitute a main body portion of the cell assembly, and the portions of the positive electrode sheet and the negative electrode sheet that have no active material each constitute a tab. A positive electrode tab and a negative electrode tab may be both located at one end of the main body portion or respectively located at two ends of the main body portion. During charging and discharging of the battery, a positive electrode active substance and a negative electrode active substance react with an electrolyte, and the tabs are connected to the electrode terminals to form a current loop.

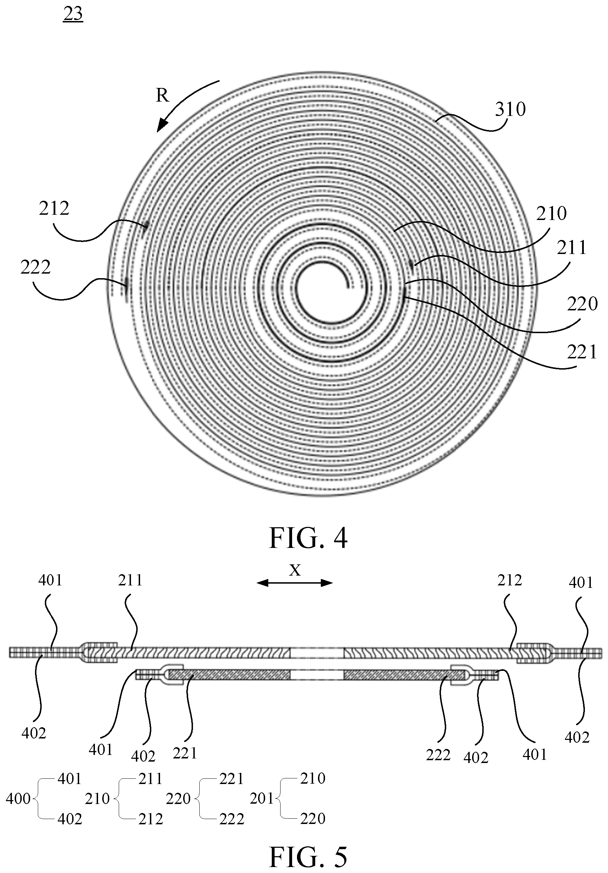

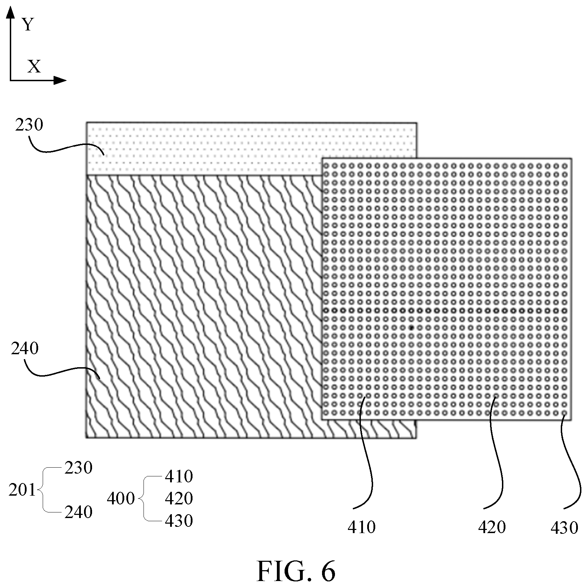

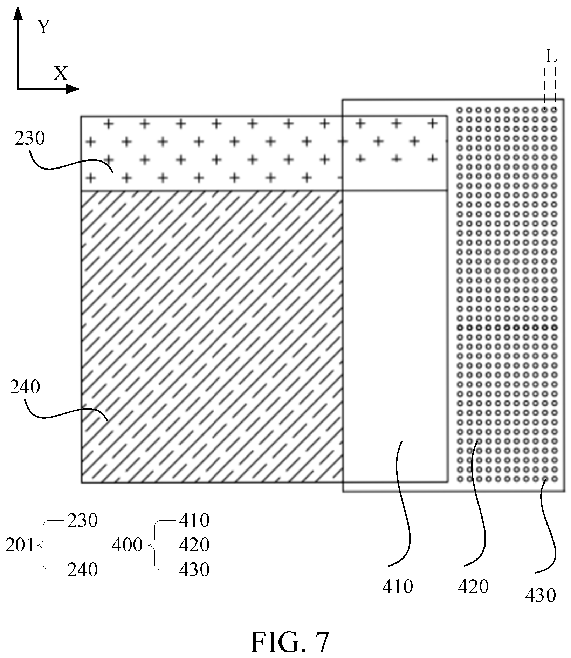

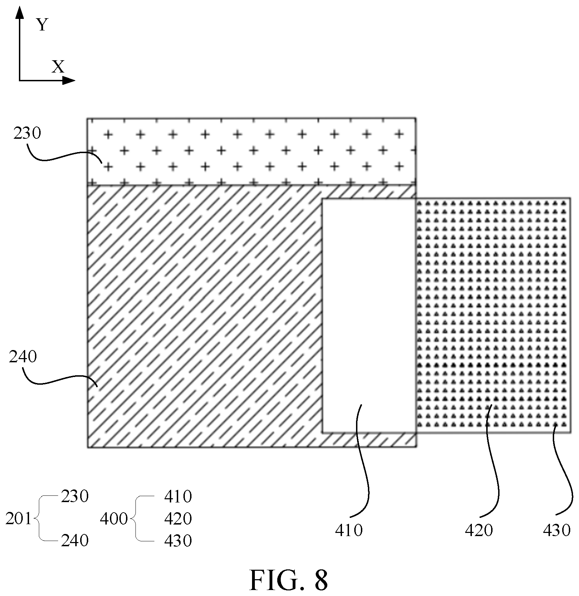

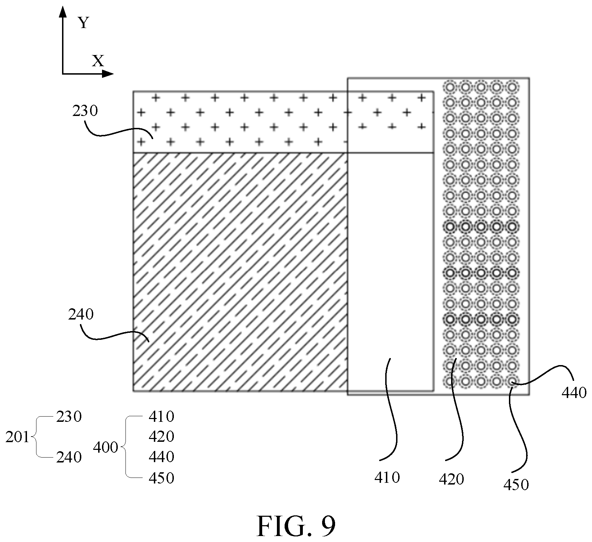

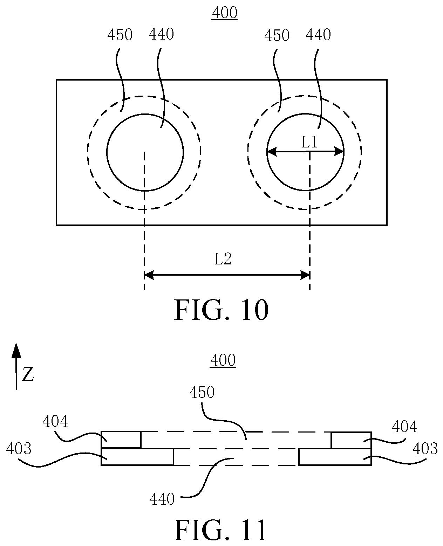

According to some embodiments of the present application, referring to FIG. 4 to FIG. 9, FIG. 4 is a schematic structural diagram of an electrode assembly provided by some embodiments of the present application; FIG. 5 is a schematic diagram of an unfolded electrode sheet provided by some embodiments of the present application; FIG. 6 is a first schematic diagram of taping an electrode sheet provided by some embodiments of the present application; FIG. 7 is a second schematic diagram of taping an electrode sheet provided by some embodiments of the present application; FIG. 8 is a third schematic diagram of taping an electrode sheet provided by some embodiments of the present application; FIG. 9 is a fourth schematic diagram of taping an electrode sheet provided by some embodiments of the present application; FIG. 10 is a partial enlarged view of an adhesive tape provided by some embodiments of the present application; FIG. 11 is a cross-sectional view of FIG. 10.

The present application provides a battery cell 20. The battery cell 20 includes an electrode assembly 23. The electrode assembly 23 includes an electrode sheet 201 and an adhesive tape 400. The electrode sheet 201 is wound along a preset winding direction R. The electrode sheet 201 includes a first end close to a winding start point and a second end close to a winding end point, and the adhesive tape 400 is at least partially bonded to a surface of the first end and/or the second end of the electrode sheet 201. The adhesive tape 400 includes through holes 430 passing through the adhesive tape 400 in a thickness direction.

The electrode assembly 23 of the embodiments of the present application can be applied to various types of battery cells 20. The battery cell 20 may comprise a lithium-ion secondary battery, a lithium-ion primary battery, a lithium-sulfur battery, a sodium-lithium-ion battery, a sodium-ion battery or a magnesium-ion battery, etc., which are not limited in the embodiments of the present disclosure. The battery cell 20 may be cylindrical, flat, cuboid or in another shape, which is not limited in the embodiments of the present application. The battery cells 20 are generally classified into cylindrical battery cells, prismatic battery cells, and pouch battery cells according to the packaging method, which is also not limited in the embodiments of the present application.

In the embodiments of the present application, the electrode sheet 201 may be a positive electrode sheet 210 or a negative electrode sheet 220. The electrode assembly 23 may further include a separator 310 disposed between the positive electrode sheet 210 and the negative electrode sheet 220. The operation of the electrode assembly 23 is achieved by the movement of metal ions in the electrolyte between the positive electrode sheet 210 and the negative electrode sheet 220.

For example, the winding structure of the electrode assembly 23 may be a cylindrical winding structure. The preset winding direction may be a direction from the inside to the outside. One end of the electrode sheet 201 is used as the winding start point, and the electrode sheet is wound from the inside to the outside to form the shape. The first end close to the winding start point is located inside the electrode assembly 23. The second end close to the winding end point is located outside the electrode assembly 23.

Referring to FIG. 4, the negative electrode sheet 220 has a first end 221 close to the winding start point and a second end 222 close to the winding end point along the winding direction R. The positive electrode sheet 210 has a first end 211 close to the winding start point and a second end 212 close to the winding end point along the winding direction R. In the electrode assembly, one separator 310, the negative electrode sheet 220, another separator 310, and the positive electrode sheet 210 are sequentially stacked and then wound along the preset winding direction R. The two separators 310 may both be longer than the negative electrode sheet 220 and the positive electrode sheet 210 in the preset winding direction R. Correspondingly, the innermost part of the electrode assembly 23 may be wound first from the two separators 310, and the ends of the two separators 310 are wound on the outermost part of the electrode assembly 23.

In one example, at least one of the first end 221 of the negative electrode sheet 220 and the first end 211 of the positive electrode sheet 210 has an adhesive tape 400 at least partially bonded to the surface thereof. In some embodiments, the adhesive tape 400 is bonded to the surface of one end of the electrode sheet 201 along a width direction Y of the electrode sheet 201. By adhering the adhesive tape 400 to the electrode sheet 201 close to the winding start point, the electrode sheet 201 at the central hole position can form a self-supporting structure, enhancing the anti-deformation ability of the electrode sheet 201 and reducing the risk of deformation and collapse at the center position of the electrode assembly 23.

In another example, at least one of the second end 222 of the negative electrode sheet 220 and the second end 212 of the positive electrode sheet 210 has an adhesive tape 400 at least partially bonded to the surface thereof. By using the adhesive tape 400 for adhesion and fixation at the second end of the electrode sheet 201 close to the winding end point, a termination and fixation effect of the electrode sheet 201 can be achieved, ensuring that the wound electrode assembly 23 does not loosen.

In yet another example, referring to FIG. 5, at least a portion of the surfaces of the first end 221 and the second end 222 of the negative electrode sheet 220, and the first end 211 and the second end 212 of the positive electrode sheet 210 are all adhered with the adhesive tape 400. By adhering the adhesive tape 400 to the electrode sheet 201 close to the winding start point, the electrode sheet 201 at the central hole position can form a self-supporting structure, enhancing the anti-deformation ability of the electrode sheet 201 and reducing the risk of deformation and collapse at the center position of the electrode assembly 23. Moreover, by using the adhesive tape 400 for adhesion and fixation at the second end of the electrode sheet 201 close to the winding end point, a termination and fixation effect of the electrode sheet 201 can be achieved, ensuring that the wound electrode assembly 23 does not loosen.

In the embodiments of the present application, the adhesive tape 400 may include a substrate layer 403 and an adhesive layer 404. The adhesive layer 404 is disposed on one side surface of the substrate layer 403. The adhesive layer 404 can serve as an adhesive surface, while the other side surface of the substrate layer 403 serves as a non-adhesive surface. The adhesive tape 400 includes through holes 430 passing through the adhesive tape 400 in the thickness direction. During the battery charge and discharge process, metal ions inside the electrode assembly 23 can move between the positive electrode sheet 210 and the negative electrode sheet 220 through the through holes 430 included in the adhesive tape 400. Referring to FIG. 5, the through holes 430 may be located in the entire area of the adhesive tape 400. Referring to FIG. 6 to FIG. 9, the through holes 430 may also be located only in a part of the area of the adhesive tape 400. There may be a plurality of through holes 430. The shape of the through holes 430 may be one or more of an ellipse, a circle, and a polygon.

In the embodiments of the present application, by bonding the adhesive tape 400 to the surface of the first end of the electrode sheet 201 close to the winding start point, the supporting effect of the central hole of the electrode assembly 23 is improved; by bonding the adhesive tape 400 to the surface of the second end of the electrode sheet 201 close to the winding end point, a termination and fixation effect of the electrode sheet 201 is achieved, which can prevent the wound electrode assembly 23 from loosening; the adhesive tape 400 includes the through holes 430 passing through the adhesive tape 400 in the thickness direction, which can improve the infiltration effect of an electrolyte during injection into the battery cell 20, thereby improving the cycle performance of the battery cell 20.

According to some embodiments of the present application, along a length direction X of the electrode sheet 201, the adhesive tape 400 may include a first area 410 connected to a second area 420. The first area 410 is bonded to the surface of the electrode sheet 201. The second area 420 is offset from the electrode sheet 201. The through holes 430 are located in the second area 420.

For example, referring to FIG. 5, the electrode sheet 201 may be any one of the first end 221 and the second end 222 of the negative electrode sheet 220, and the first end 211 and the second end 212 of the positive electrode sheet 210. At least a portion of the surface of the electrode sheet 201 is adhered with the adhesive tape 400.

At the first end 221 of the negative electrode sheet, the second end 222 of the negative electrode sheet, the first end 211 of the positive electrode sheet, and the second end 212 of the positive electrode sheet, along the length direction X of the electrode sheet 201, the adhesive tape 400 may include a first area 410 connected to second area 420. The through holes 430 passing through the adhesive tape 400 in the thickness direction included in the adhesive tape 400 are located in the second area 420. That is to say, the first area 410 of the adhesive tape 400 does not include the through holes 430. The first area 410 of the adhesive tape 400 is bonded to the surface of the electrode sheet 201, increasing the adhesion area between the adhesive tape 400 and the electrode sheet 201 to reduce the probability of the adhesive tape 400 detaching during the winding process of the electrode sheet 201 to form the electrode assembly. It can also prevent the formation of a lithium-rich area in the punched area of the adhesive tape 400, which could cause lithium plating risk.

In the embodiments of the present application, along the length direction X of the electrode sheet 201, the adhesive tape 400 includes a first area 410 connected to a second area 420. By arranging the through holes 430 in the second area 420 offset from the electrode sheet 201, the first area 410 without the through holes 430 has a larger adhesion area with the surface of the electrode sheet 201, which can make the adhesion between the adhesive tape 400 and the electrode sheet 201 more secure and reliable, while effectively reducing the blocking of ion diffusion channels by the adhesive tape 400, and can also improve the infiltration effect of an electrolyte during injection into the battery cell 20.

According to some embodiments of the present application, referring to FIG. 5, the adhesive tape 400 includes a first adhesive layer 401 and a second adhesive layer 402. A first area 410 of the first adhesive layer 401 and a first area 410 of the second adhesive layer 402 are respectively bonded to opposite surfaces of the electrode sheet 201. A second area 420 of the first adhesive layer 401 and a second area 420 of the second adhesive layer 402 are bonded to each other.

For example, at least a portion of the surfaces of the first end 221 and the second end 222 of the negative electrode sheet 220, and the first end 211 and the second end 212 of the positive electrode sheet 210 are all adhered with the adhesive tape 400.

At the first end 221 of the negative electrode sheet, the second end 222 of the negative electrode sheet, the first end 211 of the positive electrode sheet, and the second end 212 of the positive electrode sheet, the adhesive tape 400 includes the first adhesive layer 401 and the second adhesive layer 402. The first area 410 of the first adhesive layer 401 and the first area 410 of the second adhesive layer 402 are respectively bonded to opposite surfaces of the electrode sheet. The second area 420 of the first adhesive layer 401 and the second area 420 of the second adhesive layer 402 are bonded to each other.

The second area 420 of the first adhesive layer 401 and the second area 420 of the second adhesive layer 402 may both be provided with through holes 430. When the second area 420 of the first adhesive layer 401 and the second area 420 of the second adhesive layer 402 are bonded to each other, the through holes 430 are aligned, so that the adhesive tape 400 includes the through holes 430 passing through the adhesive tape 400 in the thickness direction in the case where the adhesive tape 400 includes the first adhesive layer 401 and the second adhesive layer 402.

In the embodiments of the present application, by providing the first adhesive layer 401 and the second adhesive layer 402, it is convenient to adhere the adhesive tape 400 to both side surfaces of one end of the electrode sheet 201. Moreover, the two adhesive layers being bonded to each other can prevent adhesive layer exposure and maintain the adhesion of the electrode sheet during rollers passing, which facilitates smooth winding of the electrode assembly 23.

According to some embodiments of the present application, referring to FIG. 10 and FIG. 11, the adhesive tape 400 includes a substrate layer 403 and an adhesive layer 404 sequentially arranged along a thickness direction Z. The substrate layer 403 is provided with a plurality of first via holes 440. The adhesive layer 404 is provided with a plurality of second via holes 450 in one-to-one correspondence with the plurality of first via holes 440. The first via holes 440 and the second via holes 450 are in communication to form the through holes 430. A projection of a first via hole 440 on a surface of the adhesive layer 404 completely falls within a range of a corresponding second via hole 450.

In the embodiments of the present application, the adhesive tape 400 may include the substrate layer 403 and the adhesive layer 404. The adhesive layer 404 is disposed on one side surface of the substrate layer. The adhesive layer 404 can serve as an adhesive surface, while the other side surface of the substrate layer 403 serves as a non-adhesive surface. The material of the substrate layer 403 may include polypropylene (PP), polyethylene terephthalate (PET), or polyimide (PI), etc. The material of the adhesive layer 404 may include an acrylic adhesive (i.e., a PMMA adhesive), etc.

In the embodiments of the present application, referring to FIG. 11, the first via holes 440 provided in the substrate layer 403 penetrates the substrate layer along the thickness direction Z of the adhesive tape 400. The second via holes 450 provided in the adhesive layer 404 penetrates the adhesive layer 404 along the thickness direction Z of the adhesive tape 400. The shape of the first via hole 440 and the second via hole 450 may be the same or different. The second via holes 450 corresponds one-to-one with the first via holes 440. The projection of the first via hole 440 on the surface of the adhesive layer 404 completely falling within the range of the second via hole 450 means that the substrate layer 403 can completely cover the surface of the adhesive layer and has a portion extending beyond the adhesive layer. In this way, when the first adhesive layer 401 and the second adhesive layer 402 are bonded to each other, even if there is a certain misalignment, the portion of the substrate layer 403 extending beyond the adhesive layer 404 can cover the adhesive layer 404 exposed due to the misalignment. This can prevent the adhesive layer 404 from adhering to other surfaces, such as adhering to the electrode sheet or transport rollers during winding or transport.

In the embodiments of the present application, by setting the first via holes 440 in the substrate layer 403 on the surface to be smaller than the second via holes 450 in the adhesive layer 404, misalignment between through holes 430 during the opposite adhesion process of the adhesive tape 400 is allowed, thereby simplifying the adhesion process of the adhesive tape 400.

According to some embodiments of the present application, along a width direction Y of the electrode sheet 201, the electrode sheet 201 includes a tab area 230 and an electrode sheet body area 240. The electrode sheet body area 240 has at least a portion of its surface bonded to the adhesive tape 400.

In some embodiments, the electrode sheet body area 240 of the electrode sheet 201 is an area where an active material is coated on a current collector. The tab area 230 of the electrode sheet 201 is an area where no active material is coated on the current collector. The tab area 230 and the electrode sheet body area 240 are adjacent to each other along the width direction Y of the electrode sheet 201. The electrode sheet 201 may be a positive electrode sheet 210 or a negative electrode sheet 220. The positive electrode sheet 210 includes a positive current collector and a positive active material layer. The positive active material layer is coated on a surface of the positive current collector. The positive current collector portion not coated with the positive active material layer protrudes from the portion coated with the positive active material layer to serve as a positive tab. Taking a lithium ion battery as an example, the positive current collector may be made of aluminum, and the positive active material may be lithium cobalt oxide, lithium iron phosphate, ternary lithium, lithium manganate, etc. The negative electrode sheet 220 includes a negative electrode current collector and a negative electrode active material layer. A surface of the negative electrode current collector is coated with the negative electrode active material layer, the negative electrode current collector portion not coated with the negative electrode active material layer protrudes from the negative electrode current collector portion coated with the negative electrode active material layer, and the negative electrode current collector portion not coated with the negative electrode active material layer serves as a negative electrode tab. The material of the negative current collector may be copper. The negative active material may be carbon, silicon, etc.

In some embodiments, along the width direction Y of the electrode sheet 201, the width of the adhesive tape 400 may be the same as the width of the electrode sheet body area 240, or the width of the adhesive tape 400 may be smaller than the width of the electrode sheet body area 240.

For example, referring to FIG. 8, along the width direction Y of the electrode sheet 201, the width of the adhesive tape 400 is smaller than the width of the electrode sheet body area 240. A portion of the surface of the electrode sheet body area 240 is bonded to the adhesive tape 400.

In the embodiments of the present application, along the width direction Y of the electrode sheet 201, the electrode sheet 201 includes a tab area 230 and an electrode sheet body area 240. The electrode sheet body area 240 has at least a portion of its surface bonded to the adhesive tape 400. Adhering the adhesive tape 400 to a portion of the surface of the electrode sheet 201 can reduce the probability of adhesive tape 400 misalignment, wrinkling, or bubbles of the adhesive tape 400, thereby simplifying the adhesion process of the adhesive tape 400.

According to some embodiments of the present application, the tab area 230 has at least a portion of its surface bonded to the adhesive tape 400.

In the embodiments of the present application, along the width direction Y of the electrode sheet 201, the entire surface of the tab area 230 may be bonded to the adhesive tape 400, or a portion of the surface of the tab area 230 may be bonded to the adhesive tape 400.

For example, referring to FIG. 6, along the width direction Y of the electrode sheet 201, a portion of the surface of the electrode sheet body area 240 and a portion of the surface of the tab area 230 are bonded to the adhesive tape 400.

In the embodiments of the present application, by adhering the adhesive tape 400 to at least a portion of the surface of the tab area 230, the probability of tab area 230 folding can be reduced.

In some embodiments, along the width direction Y of the electrode sheet 201, the size of the adhesive tape 400 may be greater than or equal to the size of the electrode sheet 201.

In the embodiments of the present application, the size of the adhesive tape 400 being greater than or equal to the size of the electrode sheet 201 along the width direction Y of the electrode sheet 201 means that both the surface of the tab area 230 and the surface of the electrode sheet body area 240 are bonded to the adhesive tape 400.

For example, referring to FIG. 7 and FIG. 9, along the width direction Y of the electrode sheet 201, the entire surface of the tab area 230 and the entire surface of the electrode sheet body area 240 are bonded to the adhesive tape 400.

In the embodiments of the present application, the size of the adhesive tape 400 being greater than or equal to the size of the electrode sheet 201 along the width direction Y of the electrode sheet 201 can further reduce the probability of tab folding and also further reduce the process requirements for adhesive tape 400 adhesion.

According to some embodiments of the present application, the shape of the through holes 430 may include one or more of an ellipse, a circle, and a polygon.

For example, referring to FIG. 8, the shape of the through hole 430 is a triangle. Referring to FIG. 6, FIG. 7, and FIG. 9, the shape of the through hole 430 is a circle.

In one example, the shape of the through holes 430 may simultaneously include an ellipse, a circle, and a polygon.

In the embodiments of the present application, the shape of the through holes 430 includes one or more of an ellipse, a circle, and a polygon. The through holes 430 can be compatible with various shapes, making it suitable for various punching dies during the processing of the through holes 430, thereby reducing the production difficulty of the adhesive tape 400.

According to some embodiments of the present application, a ratio S of a distance L between centers of two adjacent through holes 430 to a maximum distance from a center of a through hole 430 to an edge of the through hole 430 satisfies 2 < S ≤ 3.

In the embodiments of the present application, referring to FIG. 7, the distance between centers of two adjacent through holes is L. If the ratio S of the distance L between centers of two adjacent through holes 430 to the maximum distance from the center of a through hole 430 to the edge of the through hole 430 is too small, meaning the distance between two adjacent through holes 430 is too close, the overall structural strength of the adhesive tape 400 becomes weaker, and it is prone to break during the winding process of the electrode sheet 201, which is not conducive to supporting the structure of the electrode assembly.

In the embodiments of the present application, if the ratio S of the distance between centers of two adjacent through holes 430 to the maximum distance from the center of a through hole 430 to the edge of the through hole 430 is too large, meaning the distance between two adjacent through holes 430 is too far, the number of through holes 430 will be relatively small, which is not conducive to improving the infiltration effect of the electrolyte.

Optionally, S may be 2, 2.2, 2.4, 2.6, 2.8, or 3, etc.

In the embodiments of the present application, by making the ratio S of the distance between centers of two adjacent through holes 430 to the maximum distance from the center of a through hole 430 to the edge of the through hole 430 satisfy 2 < S ≤ 3, the infiltration effect of an electrolyte can also be enhanced, while improving the supporting effect on the electrode assembly 23.

According to some embodiments of the present application, referring to FIG. 10, the through hole 430 is a circular hole. A diameter L1 of the through hole 430 satisfies 0.1 millimeter (mm) ≤ L1 ≤ 10 mm. A distance L2 between centers of two adjacent through holes 430 satisfies 0.2 mm ≤ L2 ≤ 30 mm.

In the embodiments of the present application, the smaller the diameter L1 of the through holes 430, the more prone it is to clogging. The larger the diameter L1 of the through hole 430, the weaker the support strength of the adhesive tape 400, and the adhesion strength between the adhesive tape 400 and the surface of the electrode sheet 201 also decreases. Similarly, the larger the distance L2 between centers of two adjacent through holes 430, the fewer the number of through holes 430, and the worse the infiltration effect of the battery cell. The larger the distance L2 between centers of two adjacent through holes 430, the more the number of through holes 430, the weaker the support strength of the adhesive tape 400, and the adhesion strength between the adhesive tape 400 and the surface of the electrode sheet 201 also decreases.

Optionally, the diameter L1 of the through hole 430 may be 0.1 mm, 1 mm, 3 mm, 5 mm, or 10 mm, etc. The distance L2 between centers of two adjacent through holes 430 may be 0.2 mm, 5 mm, 10 mm, 20 mm, or 30 mm, etc.

In the embodiments of the present application, by making the diameter L1 of the through holes 430 satisfy 0.1 mm ≤ L1 ≤ 10 mm, and the distance L2 between centers of two adjacent through holes 430 satisfy 0.2 mm ≤ L2 ≤ 30 mm, the adhesion between the adhesive tape 400 and the electrode sheet 201 can be secure and reliable, while reducing the blocking of lithium-ion diffusion channels by the adhesive tape 400 and reducing the impact of the adhesive tape 400 on the electrolyte infiltration effect.

According to some embodiments of the present application, the diameter L1 of the through holes 430 satisfies 0.5 mm ≤ L1 ≤ 5 mm. The distance L2 between centers of two adjacent through holes 430 satisfies 1 mm ≤ L2 ≤ 15 mm.

Optionally, the diameter L1 of the through holes 430 may be 0.5 mm, 1 mm, 3 mm, 4 mm, or 5 mm, etc. The distance L2 between centers of two adjacent through holes 430 may be 1 mm, 5 mm, 10 mm, 10 mm, or 15 mm, etc.

In the embodiments of the present application, by making the diameter L1 of the through holes 430 satisfy 0.5 mm ≤ L1 ≤ 5 mm, and the distance L2 between centers of two adjacent through holes 430 satisfy 1 mm ≤ L2 ≤ 15 mm, the adhesion between the adhesive tape 400 and the electrode sheet 201 can be made more secure and reliable, while effectively reducing the blocking of lithium-ion diffusion channels by the adhesive tape 400 and further reducing the impact of the adhesive tape 400 on the electrolyte infiltration effect.

The embodiments of the present application provide a battery 100. The battery 100 includes the battery cell 20 according to the above embodiments.

By using the battery cell 20 of the embodiments of the present application, the infiltration effect of an electrolyte during injection into the battery cell can be improved, and the cycle performance of the battery cell 20 can be enhanced.

The embodiments of the present application provide an electric device. The electric device includes the battery 100 according to the above embodiments. The battery 100 is used to provide electrical energy.

A specific embodiment is provided below to further illustrate the technical solution of the present application, as shown in FIG. 1 to FIG. 11.

A battery cell 20 includes an electrode assembly 23. The electrode assembly 23 includes an electrode sheet 201 and an adhesive tape 400. The electrode sheet 201 is wound along a preset winding direction R. The electrode sheet 201 includes a first end close to a winding start point and a second end close to a winding end point, and the adhesive tape 400 is at least partially bonded to a surface of the first end and/or the second end of the electrode sheet 201, where the adhesive tape 400 includes through holes 430 passing through the adhesive tape 400 in a thickness direction. The shape of the through holes 430 includes one or more of an ellipse, a circle, and a polygon. A ratio S of a distance L between centers of two adjacent through holes 430 to a maximum distance from a center of a through hole 430 to an edge of the through hole 430 satisfies 2 ≤ S ≤ 3.

The adhesive tape 400 includes a first adhesive layer 401 and a second adhesive layer 402. A first area 410 of the first adhesive layer 401 and a first area 410 of the second adhesive layer 402 are respectively bonded to opposite surfaces of the electrode sheet 201. A second area 420 of the first adhesive layer 401 and a second area 420 of the second adhesive layer 402 are bonded to each other.

The adhesive tape 400 includes a substrate layer 403 and an adhesive layer 404 sequentially arranged along the thickness direction. The substrate layer 403 is provided with a plurality of first via holes 440. The adhesive layer 404 is provided with a plurality of second via holes 450 in one-to-one correspondence with the plurality of first via holes 440. The first via holes 440 and the second via holes 450 are in communication to form the through holes 430. A projection of a first via hole 440 on a surface of the adhesive layer 404 completely falls within a range of a corresponding second via hole 450.

Along a length direction X of the electrode sheet 201, the adhesive tape 400 includes a first area 410 connected to a second area 420. The first area 410 is bonded to the surface of the electrode sheet 201. The second area 420 is offset from the electrode sheet 201. The through holes 430 are located in the second area 420. Along a width direction Y of the electrode sheet 201, the electrode sheet 201 includes a tab area 230 and an electrode sheet body area 240. In some embodiments, the electrode sheet body area 240 has at least a portion of its surface bonded to the adhesive tape 400. In other embodiments, the tab area 230 has at least a portion of its surface bonded to the adhesive tape 400. In yet other embodiments, along the width direction Y of the electrode sheet 201, the size of the adhesive tape 400 is greater than or equal to the size of the electrode sheet 201.

In some embodiments, the through holes 430 are circular holes. A diameter L1 of the through holes 430 satisfies 0.5 mm ≤ L1 ≤ 5 mm. A distance L2 between centers of two adjacent through holes 430 satisfies 1 mm ≤ L2 ≤ 15 mm.

Finally, it should be noted that the above embodiments are merely used for illustrating rather than limiting the technical solutions of the present application; although the present application has been illustrated in detail with reference to the foregoing embodiments, those of ordinary skill in the art should understand that the technical solutions specified in the foregoing embodiments may still be modified, or some or all the technical features in the technical solutions may be equivalently replaced; and these modifications or replacements do not make the essence of the corresponding technical solutions depart from the scope of the technical solutions of the embodiments of the present application, and all fall within the scope of the claims and the specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cell , comprising an electrode assembly comprising:
an electrode sheet wound along a preset winding direction, wherein the electrode sheet comprises a first end close to a winding start point and a second end close to a winding end point, and
an adhesive tape at least partially bonded to a surface of the first end and/or the second end of the electrode sheet , wherein the adhesive tape comprises through holes passing through the adhesive tape in a thickness direction.

2. The battery cell according to claim 1, wherein along a length direction of the electrode sheet , the adhesive tape comprises a first area connected to a second area , the first area is bonded to the surface of the electrode sheet , the second area is offset from the electrode sheet , and the through holes are located in the second area .

3. The battery cell according to claim 2, wherein the adhesive tape comprises a first adhesive layer and a second adhesive layer , a first area of the first adhesive layer and a first area of the second adhesive layer are respectively bonded to opposite surfaces of the electrode sheet , and a second area of the first adhesive layer and a second area of the second adhesive layer are bonded to each other.

4. The battery cell according to any one of claims 1 to 3, wherein the adhesive tape comprises a substrate layer and an adhesive layer sequentially arranged along the thickness direction, the substrate layer is provided with a plurality of first via holes , the adhesive layer is provided with a plurality of second via holes in one-to-one correspondence with the plurality of first via holes , and the first via holes and the second via holes are in communication to form the through holes ,
wherein a projection of the first via hole on a surface of the adhesive layer completely falls within a range of the corresponding second via hole.

5. The battery cell according to any one of claims 1 to 4, wherein along a width direction of the electrode sheet , the electrode sheet comprises a tab area and an electrode sheet body area , and at least a portion of a surface of the electrode sheet body area is bonded to the adhesive tape .

6. The battery cell according to claim 5, wherein at least a portion of a surface of the the area is bonded to the adhesive tape .

7. The battery cell according to any one of claims 1 to 6, wherein a shape of the through holes comprises one or more of an ellipse, a circle, and a polygon.

8. The battery cell according to any one of claims 1 to 7, wherein a ratio S of a distance between centers of two adjacent through holes to a maximum distance from the center of the through hole to an edge of the through hole satisfies 2 < S ≤ 3.

9. The battery cell according to any one of claims 1 to 8, wherein the through holes are circular holes, a diameter L1 of the through holes satisfies 0.1 mm ≤ L1 ≤ 10 mm, and a distance L2 between the centers of two adjacent through holes satisfies 0.2 mm ≤ L2 ≤ 30 mm.

10. The battery cell according to claim 9, wherein the diameter L1 of the through holes satisfies 0.5 mm ≤ L1 ≤ 5 mm, and the distance L2 between the centers of the two adjacent through holes satisfies 1 mm ≤ L2 ≤ 15 mm.

11. A battery , comprising the battery cell according to any one of claims 1 to 10.

12. An electric device, comprising the battery according to claim 11, wherein the battery is used for providing electrical energy.
